(19) Europäisches Patentamt
European Patent Office
Office européen des brevets

(11) EP 3 038 251 A1

# (12) EUROPEAN PATENT APPLICATION

(43) Date of publication:
**29.06.2016 Bulletin 2016/26**

(51) Int Cl.:
***H02P 21/00*** *(2016.01)*

(21) Application number: **15200670.6**

(22) Date of filing: **17.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.12.2014 JP 2014259207**

(71) Applicant: **Toyota Jidosha Kabushiki Kaisha**
**Toyota-shi, Aichi-ken 471-8571 (JP)**

(72) Inventors:
- **HATTORI, Hiroyuki**
  **Toyota-shi, Aichi-ken,, 471-8571 (JP)**
- **OKOCHI, Toshinori**
  **Toyota-shi, Aichi-ken,, 471-8571 (JP)**
- **WAKAMATSU, Shinji**
  **Toyota-shi, Aichi-ken,, 471-8571 (JP)**

(74) Representative: **Winter, Brandl, Fürniss, Hübner, Röss, Kaiser, Polte - Partnerschaft mbB**
**Patent- und Rechtsanwaltskanzlei**
**Bavariaring 10**
**80336 München (DE)**

## (54) MOTOR CONTROL APPARATUS AND MOTOR CONTROL METHOD

(57) A motor control apparatus controls a motor system including a motor and an inverter that outputs electric power to the motor. The motor control apparatus includes an electronic control unit. The electronic control unit is configured to set a q-axis current command value in response to a torque command value, and execute system loss reduction control for controlling a d-axis current command value such that a system loss (Ps) that is the sum of a copper loss (Pc), an iron loss (Pi) and an inverter loss (Pinv) is smaller than the system loss (Ps) at the time when a motor loss (Pm) that is the sum of the copper loss (Pc) and the iron loss (Pi) is minimum. The copper loss (Pc), the iron loss (Pi) and the inverter loss (Pinv) change as a current phase (β) of a current vector changes in a q-d plane.

FIG. 3

Ps_0
Ps_2
Ps_1
Ps_2
Ps
Pm
Pi
Pinv
Pc
LOSS
β=0
β1
β2
β3
CURRENT PHASE

EP 3 038 251 A1

## Description

### BACKGROUND OF THE INVENTION

#### 1. Field of the Invention

The invention relates to a motor control apparatus and a motor control method that control a motor system including a motor and an inverter that outputs electric power to the motor.

#### 2. Description of Related Art

Generally, there is known an electromotive vehicle including a motor as a drive source. The motor is driven by electric power from a battery to output power. A three-phase alternating-current synchronous motor is often used as such a motor. Direct-current voltage that is supplied from a power supply is converted to three-phase alternating-current voltage by an inverter, and the three-phase alternating-current voltage is applied to the three-phase alternating-current synchronous motor. Thus, the three-phase alternating-current synchronous motor is driven.

In such an electromotive vehicle, in order to efficiently drive the motor, maximum torque control has been frequently used as a control mode of the motor. The maximum torque control maximizes a torque at the same current (minimizes a current at the same torque). With the maximum torque control, it is possible to reduce a d-axis current and, by extension, a motor current.

However, when the maximum torque control is executed, there are cases where various losses increase and, as a result, the efficiency deteriorates. Japanese Patent Application Publication JP 2008-236948 A describes a technique for controlling a motor. In the technique, a d-axis current is controlled such that a motor loss that is the sum of an iron loss and a copper loss is minimum. With the above technique, the motor is efficiently operated to some extent.

Japanese Patent Application Publication JP 2005-210772 A describes a technique for, when an induced voltage exceeds a motor terminal voltage, executing field weakening control that weakens a field by advancing the phase (current phase) of a current vector in a d-q plane.

### SUMMARY OF THE INVENTION

The invention provides a motor control apparatus and a motor control method that are configured in consideration of not only an iron loss and a copper loss but also an inverter loss and that are able to further reduce a system loss that is the sum of an iron loss, a copper loss and an inverter loss.

A first aspect of the invention provides a motor control apparatus. The motor control apparatus controls a motor system including a motor and an inverter that outputs electric power to the motor. The motor control apparatus includes an electronic control unit. The electronic control unit is configured to set a q-axis current command value in response to a torque command value, and execute system loss reduction control for controlling a d-axis current command value such that a system loss that is the sum of a copper loss, an iron loss and an inverter loss is smaller than the system loss at the time when a motor loss that is the sum of the copper loss and the iron loss is minimum. The copper loss, the iron loss and the inverter loss change as a current phase of a current vector changes in a q-d plane.

In the first aspect, the electronic control unit may be configured to execute the system loss reduction control in a region in which an induced voltage is lower than or equal to a motor terminal voltage.

In the first aspect, the electronic control unit may be configured to control the d-axis current command value such that the system loss is minimum in the system loss reduction control.

In the first aspect, the electronic control unit may be configured to prestore a map that records the d-axis current command value and the q-axis current command value in correspondence with each operating point that is determined on the basis of a motor rotation speed and a torque command value, and identify the d-axis current command value and the q-axis current command value by applying a motor rotation speed and a torque command value to the map in the system loss reduction control.

In the first aspect, the electronic control unit may be configured to obtain each system loss by adding a corresponding inverter loss to the corresponding motor loss.

A second aspect of the invention provides a motor control method. The motor control method controls a motor system including a motor and an inverter that outputs electric power to the motor. The motor control method includes setting a q-axis current command value in response to a torque command value; and controlling a d-axis current command value such that a system loss that is the sum of a copper loss, an iron loss and an inverter loss is smaller than the system loss at the time when a motor loss that is the sum of the copper loss and the iron loss is minimum. The copper loss, the iron loss and the inverter loss change as a current phase of a current vector changes in a q-d plane.

In the second aspect, the motor control method may include executing the system loss reduction control in a region in which an induced voltage is lower than or equal to a motor terminal voltage.

In the second aspect, the motor control method may include controlling the d-axis current command value such that the system loss is minimum in the system loss reduction control.

In the second aspect, the motor control method may include prestoring a map that records a d-axis current command value and a q-axis current command value in correspondence with each operating point that is determined on the basis of a motor rotation speed and a torque command value, and identifying a d-axis current command value and a q-axis current command value by applying a motor rotation speed and a torque command value to the map in the system loss reduction control.

In the second aspect, the motor control method may include obtaining each system loss by adding a corresponding inverter loss to the corresponding motor loss.

According to the aspects of the invention, because the d-axis current value is controlled such that the system loss is smaller than the system loss at the time when the motor loss is minimum, it is possible to reduce the system loss as compared to an existing art. Losses that occur in a motor system including a motor and an inverter are not only an iron loss and a copper loss but also an inverter loss that occurs in the inverter. The inverter loss occurs in response to switching operations of switching elements provided in the inverter, and increases as a motor current increases. In JP 2008-236948 A and JP 2005-210772 A, the inverter loss is not considered at all, with the result that the efficiency of the motor system is not sufficiently improved.

## BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a view that shows the configuration of a hybrid vehicle;
FIG. 2 is a graph that shows applicable regions of various controls;
FIG. 3 is a graph that shows the relationship between a current phase and various losses;
FIG. 4 is a graph that shows differences in losses according to the modes of control;
FIG. 5 is a flowchart that shows the flow of motor control;
FIG. 6 is a view that shows control blocks in system loss reduction control; and
FIG. 7 is a view that shows another configuration example of a current command generation unit.

## DETAILED DESCRIPTION OF EMBODIMENTS

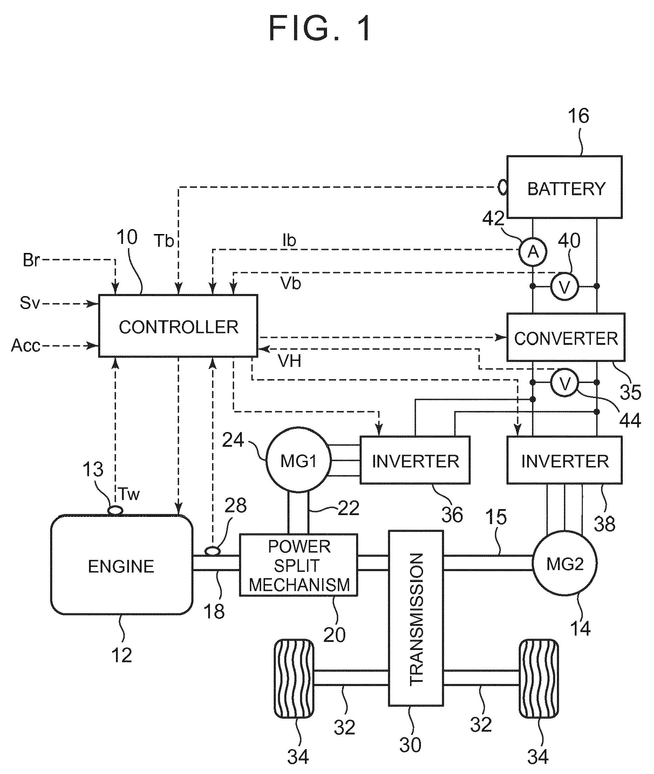

Hereinafter, an embodiment of the invention will be described with reference to the accompanying drawings. FIG. 1 is a view that shows the configuration of a hybrid vehicle to which the motor control apparatus according to the invention is applied. In FIG. 1, drive lines are represented by round bar axial elements, electric power lines are represented by continuous lines, and signal lines are represented by dashed lines.

As shown in FIG. 1, the hybrid vehicle includes an engine 12, a motor (MG2) 14, a motor (MG1) 24, a battery 16, and a controller 10. The engine 12 serves as a driving power source. The motor (MG2) 14 is another driving power source. A rotary shaft 22 is connected to the motor (MG1) 24 via a power split mechanism 20. An output shaft 18 of the engine 12 is coupled to the power split mechanism 20. The battery 16 is able to supply driving electric power to each of the motors 14, 24. The controller 10 comprehensively controls the operations of the engine 12 and motors 14, 24, and controls the charging and discharging of the battery 16.

The engine 12 is an internal combustion engine that uses gasoline, light oil, or the like, as a fuel. Cranking, a throttle opening degree, a fuel injection amount, an ignition timing, and the like, are controlled on the basis of commands from the controller 10. Thus, a startup, operation, stop, and the like, of the engine 12 are controlled.

A rotation speed sensor 28 is provided near the output shaft 18 that extends from the engine 12 to the power split mechanism 20. The rotation speed sensor 28 detects an engine rotation speed Ne. A temperature sensor 13 is provided on the engine 12. The temperature sensor 13 detects a temperature Tw of coolant that is an engine cooling medium. Values detected by the rotation speed sensor 28 and the temperature sensor 13 are transmitted to the controller 10.

The power split mechanism 20 is, for example, formed of a planetary gear mechanism. Power input from the engine 12 to the power split mechanism 20 via the output shaft 18 is transmitted to drive wheels 34 via a transmission 30 and axles 32. Thus, the vehicle is able to travel under engine power. The transmission 30 is able to reduce the speed of rotation that is input from at least one of the engine 12 and the motor 14 and then output the rotation to the axles 32.

The power split mechanism 20 is able to input part or all of the power of the engine 12, which is received via the output shaft 18, to the motor 24 via the rotary shaft 22. Each of the motors 14, 24 is a motor generator that functions as an electric motor and also functions as a generator. For example, a three-phase alternating-current synchronous motor may be used as each of the motors 14, 24.

Three-phase alternating-current voltage generated by the motor 24 is converted to direct-current voltage by an inverter 36, and then the direct-current voltage is used to charge the battery 16 or used as a drive voltage of the motor 14. The motor 24 is also able to function as an electric motor that is driven to rotate by electric power supplied from the battery 16 via a converter 35 and the inverter 36. When the motor 24 is driven to rotate, the motor 24 outputs power to the rotary shaft 22. The power may be used to crank the engine 12 when the power is input to the engine 12 via the power split mechanism 20 and the output shaft 18. In addition, the motor 24 is driven to rotate by electric power that is supplied from the battery 16. The power of the motor 24 may be used as driving power when the power is output to the axles 32 via the power split mechanism 20 and the transmission 30.

The motor 14 mainly functions as an electric motor. The motor 14 is driven to rotate by drive voltage. Direct-current voltage that is supplied from the battery 16 is stepped up by the converter 35 where necessary and then converted to three-phase alternating-current voltage by the inverter 38. The three-phase alternating-current voltage is applied to the motor 14 as the drive voltage. When the motor 14 is driven, the motor 14 outputs power to the rotary shaft 15. The power is transmitted to the drive wheels 34 via the transmission 30 and the axles 32. Thus, the hybrid vehicle travels in a state where the engine 12 is stopped, that is, a so-called EV mode. The motor 14 also has the function of assisting engine output by outputting driving power, for example, when a rapid acceleration request is issued through driver's accelerator operation. Each of the set of motor 14 and inverter 38 and the set of motor 24 and inverter 36 constitute a single motor system.

A chargeable and dischargeable electrical storage device may be used as the battery 16. The chargeable and dischargeable electrical storage device includes, for example, a secondary battery, such as a lithium ion battery, a capacitor, and the like. A voltage sensor 40 and a current sensor 42 are provided in an electrical circuit between the battery 16 and the converter 35. A battery voltage Vb and a battery current Ib are detected by these sensors 40, 42, and are input to the controller 10. A voltage sensor (voltage detection unit) 44 is further connected between the converter 35 and each of the inverters 36, 38. A system voltage VH that is a converter output voltage or an inverter input voltage is detected by the voltage sensor 44, and is input to the controller 10.

The controller 10 controls the operations of the engine 12, motors 14, 24, converter 35, inverters 36, 38, battery 16, and the like, and monitors the states of the engine 12, motors 14, 24, converter 35, inverters 36, 38, battery 16, and the like. That is, the controller 10 also functions as a motor controller. The controller 10 is a microcomputer that includes a CPU, a ROM, a RAM, and the like. The CPU executes various control programs. The ROM stores control programs, control maps, and the like, in advance. The RAM temporarily stores control programs read from the ROM, values detected by the sensors, and the like. The controller 10 includes an input port and an output port. The engine rotation speed Ne, the battery current Ib, the battery voltage Vb, a battery temperature Tb, an accelerator operation amount signal Acc, a vehicle speed Sv, a brake operation amount signal Br, the engine coolant temperature Tw, the system voltage VH, motor currents, and the like, are input to the input port. The system voltage VH is the output voltage of the converter 35 or the input voltage of each of the inverters 36, 38. The motor currents respectively flow through the motors 14, 24. The output port outputs control signals for controlling the operations of the engine 12, converter 35, inverters 36, 38, and the like.

In the present embodiment, description will be made on the assumption that the single controller 10 controls the operations of the engine 12, motors 14, 24, converter 35, inverters 36, 38, battery 16, and the like, and monitors the states of the engine 12, motors 14, 24, converter 35, inverters 36, 38, battery 16, and the like. Instead, another configuration may be as follows. An engine ECU that controls the operation state of the engine 12, a motor ECU that controls the driving of the motors 14, 24 by controlling the operations of the converter 35 and inverters 36, 38, a battery ECU that manages the SOC of the battery 16, and the like, are individually provided, and the controller 10 serves as a hybrid ECU to comprehensively control the above individual ECUs.

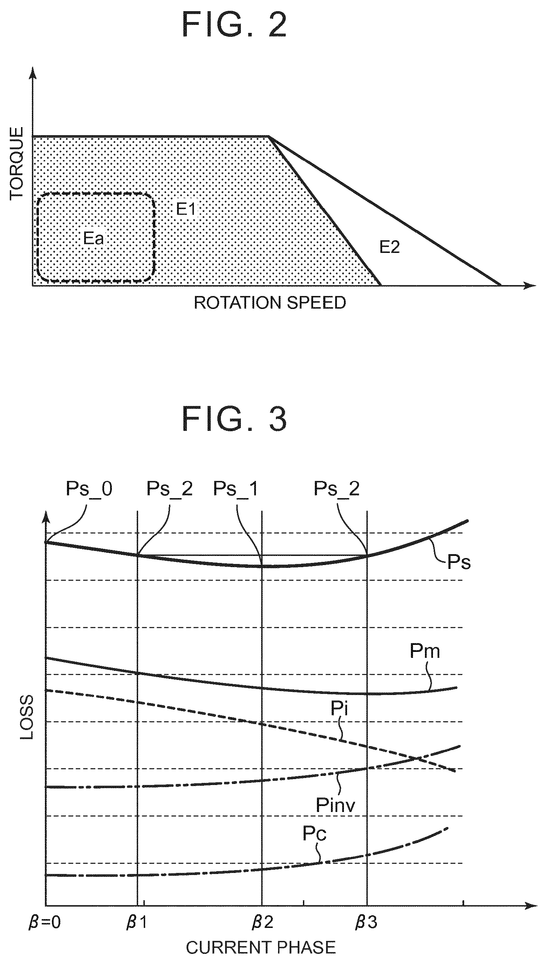

Next, motor control that is executed by the controller 10 will be described. The controller 10 according to the present embodiment changes a control mode of each of the motors 14, 24 in response to the rotation speed and output torque of a corresponding one of the motors 14, 24. FIG. 2 is a view that shows applicable regions of two control modes. In each of the motors 14, 24, torque is generated as a result of flow of a current corresponding to a voltage difference between a motor terminal voltage and an induced voltage. The motor terminal voltage is the system voltage VH that is a converter output voltage or an inverter input voltage. The system voltage VH has an upper limit value. With an increase in rotation speed or output torque, the induced voltage increases, and the induced voltage comes close to exceeding the upper limit value of the system voltage VH. In this case, no current flows, with the result that the torque reduces. In this way, in a region in which the induced voltage comes close to exceeding the system voltage VH, a rectangular wave control mode according to field weakening control is applied. In FIG. 2, a non-hatched region E2 is a region in which the field weakening control is applied. A known technique is applicable to a control mode in the region E2, so the detailed description of the control mode in the region E2 is omitted.

On the other hand, in a region E1 in which the induced voltage is lower than or equal to the upper limit value of the system voltage VH, that is, a hatched region in FIG. 2, an output torque Tr is controlled by motor current control according to vector control so as to become a torque command value Tr*. In the region E1, particularly, a low-load region Ea surrounded by the dashed line is a region that is frequently used in an electromotive vehicle. In the present embodiment, in order to improve fuel economy in the frequently-used region Ea, a specific control mode is employed. Hereinafter, this will be described in detail.

Conventionally, in the region E1, maximum torque control is applied. In the maximum torque control, a maximum torque is obtained at the same current (a current is minimum at the same torque). However, with the existing maximum torque control, various losses increase, resulting in deterioration of fuel economy. Known losses that occur at the time of driving a motor include a copper loss Pc that occurs because of a resistance component of coils of the motor and an iron loss Pi mainly composed of a hysteresis loss and an eddy-current loss. The copper loss Pc and the iron loss Pi each are a loss that occurs in the motor alone. Hereinafter, the sum of the copper loss Pc and the iron loss Pi is referred to as motor loss Pm.

There have been suggested a number of control modes for reducing the motor loss Pm. However, by focusing on only the motor loss Pm, it is difficult to improve the efficiency of an overall motor system and, by extension, it is difficult to improve the fuel economy of an electromotive vehicle. In the present embodiment, control is executed such that not the loss that occurs in each motor alone but the loss of a corresponding one of the overall motor system including the motor 14 and the inverter 38 and the overall motor system including the motor 24 and the inverter 36 (hereinafter, referred to as system loss Ps) is minimized. Each system loss Ps is obtained by adding a corresponding inverter loss Pinv to the corresponding motor loss Pm (the copper loss Pc and the iron loss Pi). The inverter loss Pinv occurs as a result of switching operations in each of the inverters 36, 38, and increases with an increase in current.

In the present embodiment, a q-axis current command value Iq* and a d-axis current command value Id* are set such that the corresponding system loss Ps is minimum. Before setting of both current command values is described, the losses will be described in detail. The copper loss Pc, the iron loss Pi and the inverter loss Pinv are respectively expressed by the following mathematical expressions (1) to (3). In the mathematical expressions, R is a coil resistance value per one phase, $\omega$ is the rotation speed of the motor, and $K_1$ to $K_4$ are constants that are determined by the characteristics of the motor and inverter.

$$Pc = R \bullet I^2 = R(Id^2+Iq^2) \qquad (1)$$

$$Pi = K_1 \bullet \omega^{1.8}(1+K_2 \bullet Id) \qquad (2)$$

$$Pinv = K_3 \bullet I^2 + K_4 \bullet I \qquad (3)$$

As is apparent from these mathematical expressions, the iron loss Pi is proportional to the 1.8th power of the rotation speed $\omega$, so the iron loss Pi is extremely large in a high-speed rotation region; however, because there is a proportional term of a d-axis current Id in the mathematical expression (2), the iron loss Pi reduces as the d-axis current Id increases in a negative direction at an operating point having the same rotation speed $\omega$ (rotation speed Nm) and the same torque. When the d-axis current Id is increased, the copper loss Pc and the inverter loss Pinv increase.

FIG. 3 is a graph that shows the relationship between the phase (current phase) $\beta$ of a current vector and various losses in a q-d plane at an operating point having a constant rotation speed Nm and a constant torque Tr. In FIG. 3, the dashed line indicates the iron loss Pi, the alternate long and short dashes line indicates the copper loss Pc, and the alternate long and two-short dashes line indicates the inverter loss Pinv. The narrow continuous line indicates the motor loss Pm that is the sum of the copper loss Pc and the iron loss Pi. The wide continuous line indicates the system loss Ps that is the sum of the motor loss Pm and the inverter loss Pinv. The d-axis current Id increases as the current phase $\beta$ increases. That is, in FIG. 3, the left-end d-axis current Id is 0, the current phase $\beta$ advances rightward, and the d-axis current Id increases in the negative direction. The left end of FIG. 3, that is, the time where $\beta = 0$ and Id = 0, indicates a loss during the maximum torque control.

The motor loss Pm that is the sum of the iron loss Pi and the copper loss Pc reduces with an increase in the current phase $\beta$ (an increase in the d-axis current), and takes a minimum value at the time when the current phase $\beta$ is $\beta 3$. When the current phase $\beta$ exceeds $\beta 3$, the motor loss Pm gradually increases. The system loss Ps obtained by adding the inverter loss Pinv to the motor loss Pm also reduces with an increase in the current phase $\beta$ (an increase in the d-axis current); however, the system loss Ps takes a minimum value Ps_1 in a relatively early stage as compared to the motor loss Pm, that is, a stage where the current phase $\beta$ becomes $\beta 2$ ($\beta 2 < \beta 3$). When the current phase $\beta$ exceeds $\beta 2$, the system loss Ps gradually increases.

In the present embodiment, the d-axis current command value Id* is set such that the current phase $\beta$ becomes $\beta 2$ at which the system loss Ps takes a minimum value Ps_1. Thus, it is possible to minimize the loss resulting from the driving of the motors 14, 24. As a result, it is possible to improve the fuel economy of the electromotive vehicle on which the motor systems are mounted. Hereinafter, a control mode in which the q-axis and d-axis current command values Iq*, Id* are determined in response to the corresponding system loss Ps is referred to as system loss reduction control.

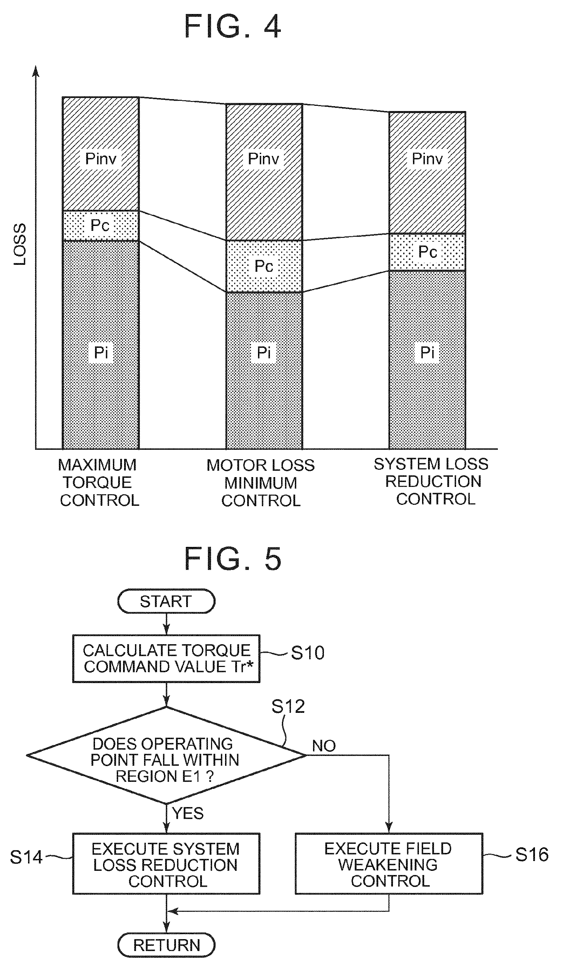

FIG. 4 is a graph that shows differences in losses among the maximum torque control and the motor loss minimum control that are conventionally frequently used and the system loss reduction control according to the present embodiment. In FIG. 4, the dark hatching indicates the iron loss Pi, the light hatching indicates the copper loss Pc, and the diagonally shaded hatching indicates the inverter loss Pinv.

As is apparent from FIG. 4, with the system loss reduction control according to the present embodiment, it is possible to reduce both the motor loss Pm and the system loss Ps as compared to the maximum torque control. With the system loss reduction control, as compared to the motor loss minimum control, although the motor loss Pm increases, the inverter loss Pinv is reduced more than that, so the loss of the overall system is reduced.

In order to execute the system loss reduction control, a map that records a q-axis current command value Iq* and a d-axis current command value Id* in correspondence with each operating point (rotation speed and torque) is stored in the ROM of the controller 10. At the time of driving each of the motors 14, 24, a q-axis current command value Iq* and a d-axis current command value Id* that minimize the corresponding system loss are identified by applying a torque command value Tr* and a motor rotation speed to the stored map.

FIG. 5 is a flowchart that shows a control mode setting routine that is executed by the controller 10. The routine is repeatedly executed at predetermined time intervals at the time when the system is driven. Specifically, as shown in FIG. 3, the controller 10 calculates the torque command value Tr* of the motor 14 from a required vehicle output based on the input accelerator operation amount Acc, and the like (S10). Subsequently, the controller 10 determines a control mode to be applied from the torque command value Tr* and rotation speed Nm of the motor 14 by consulting the prestored map, or the like (S12). That is, when the required torque and rotation speed fall within the region E2, it is determined that the induced voltage exceeds the motor terminal voltage, and the field weakening control is applied (S16). On the other hand, when the torque and the rotation speed fall within the region E1, it is determined that the induced voltage is lower than or equal to the motor terminal voltage, and the system loss reduction control is executed (S 14).

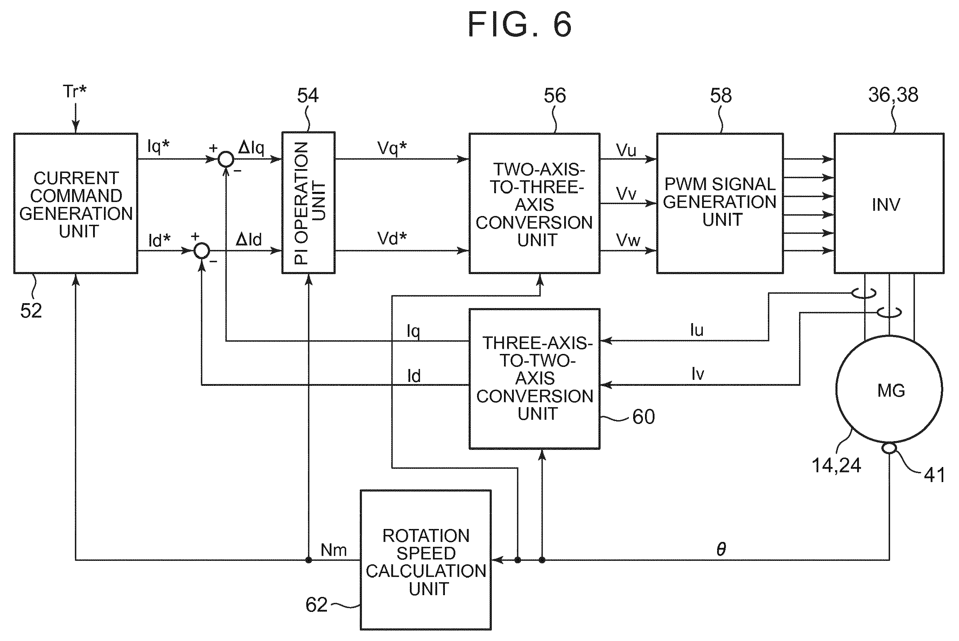

FIG. 6 shows control blocks in the system loss reduction control that is executed by the controller 10. The control blocks shown in FIG. 6 are implemented by control operation processing according to predetermined programs that are executed by the controller 10. Part or all of the control blocks may be implemented by a hardware element.

As shown in FIG. 6, the control blocks of the controller 10 include a current command generation unit 52, a PI operation unit 54, a two-axis-to-three-axis conversion unit 56, a PWM signal generation unit 58, a three-axis-to-two-axis conversion unit 60, and a rotation speed calculation unit 62.

The current command generation unit 52 identifies the q-axis current command value Iq* and the d-axis current command value Id* corresponding to the torque command value Tr* and the rotation speed Nm by applying the operating point, determined on the basis of the torque command value Tr* and the rotation speed Nm, to the prestored map. As described above, the q-axis current command value Iq* stored in the map is determined on the basis of the torque command value Tr*, and the d-axis current command value Id* is a value at which the system loss Ps becomes minimum through the system loss reduction control.

Current sensors for detecting motor currents Iu, Iv flowing through U-phase and V-phase coils of the three-phase coils are provided in each of the motors 14, 24. The U-phase current Iu and the V-phase current Iv detected by these sensors are input to the three-axis-to-two-axis conversion unit 60.

A rotation angle sensor 41 is provided in each of the motors 14, 24. The rotation angle sensor 41 is formed of, for example, a resolver, or the like, for detecting a rotor rotation angle $\theta$. The rotation angle $\theta$ detected by the rotation angle sensor 41 is input to the two-axis-to-three-axis conversion unit 56, the three-axis-to-two-axis conversion unit 60 and the rotation speed calculation unit 62.

The three-axis-to-two-axis conversion unit 60 calculates a d-axis current Id and a q-axis current Iq on the basis of the motor currents Iu, Iv, Iw detected and calculated through coordinate conversion (three phases to two phases) using the rotation angle $\theta$ of the motor 14, which is detected by the rotation angle sensor 41.

A deviation $\Delta$Id ($\Delta Id = Id^* - Id$) between the d-axis current command value Id*, obtained by the current command generation unit 52, and the detected d-axis current Id and a deviation $\Delta$Iq ($\Delta Iq = Iq^* - Iq$) between the q-axis current command value Iq*, obtained by the current command generation unit 52, and the q-axis current Iq are input to the PI operation unit 54. The PI operation unit 54 obtains a control deviation by performing PI operation (proportional-plus-integral operation) with the use of a predetermined gain on each of the d-axis current deviation $\Delta$Id and the q-axis current deviation $\Delta$Iq, and generates a d-axis voltage command value Vd* and a q-axis voltage command value Vq* based on the control deviations. In this generation, the rotation speed Nm of the motor 14 is also referenced.

The two-axis-to-three-axis conversion unit 56 converts the d-axis voltage command value Vd* and the q-axis voltage command value Vq* to U-phase, V-phase and W-phase voltage command values Vu, Vv, Vw through coordinate conversion (two phases to three phases) using the rotation angle $\theta$ of a corresponding one of the motors 14, 24. At this time, the system voltage VH is also incorporated in conversion from the d-axis and q-axis voltage command values Vd*, Vq* to the three-phase voltage command values Vu, Vv, Vw.

The PWM signal generation unit 58 generates switching control signals for turning on or off a plurality of (for example, six) switching elements included in a corresponding one of the inverters 38, 36 on the basis of a comparison between the three-phase voltage command values Vu, Vv, Vw and a predetermined carrier wave. When the inverter 38 or the inverter 36 is subjected to switching control in accordance with the generated switching control signals, an alternating-current voltage for outputting a torque according to the torque command value Tr* is applied to a corresponding one of the motors 14, 24. Thus, in a state where the corresponding system loss Ps is minimized, each of the motors 14, 24 is driven.

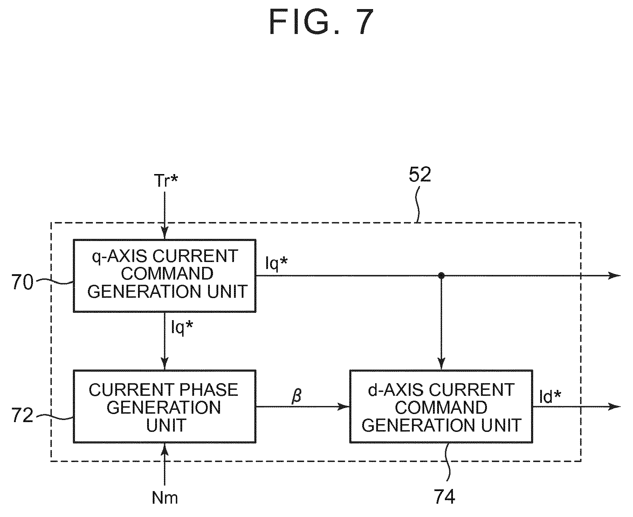

In the present embodiment, the d-axis current command value Id* is identified by consulting the map; instead, the d-axis current command value Id* may be identified by not consulting the map but performing calculation through computation, or the like. For example, the current command generation unit 52 may be configured as shown in FIG. 7. In this case, a q-axis current command generation unit 70 receives the torque command value Tr* and calculates the q-axis current command value Iq*. A known technique may be used as a method of calculating the q-axis current command value Iq*. The obtained q-axis current command value Iq* is input to a current phase generation unit 72. The current phase generation unit 72 calculates the current phase β, at which the system loss Ps is minimum, on the basis of the q-axis current command value Iq* and the motor rotation speed Nm. That is, the system loss Ps is the sum of the values obtained from the mathematical expressions (1) to (3), and the d-axis current Id and the motor current I in the mathematical expressions (1) to (3) may be expressed by the current phase β and the q-axis current Iq. That is, where the q-axis current Iq in the mathematical expressions (1) to (3) is Iq = Iq* and ω is regarded as a constant that is determined by the rotation speed Nm calculated by the rotation speed calculation unit 62, the system loss Ps may be regarded as a function having the current phase β as a variable, and may be expressed by Ps = f(β). The current phase generation unit 72 computes this function, and calculates the current phase β at which Ps is minimum. The calculated current phase β is input to a d-axis current command generation unit 74. The d-axis current command generation unit 74 calculates the d-axis current command value Id* on the basis of the current phase β and the q-axis current command value Iq*.

As another embodiment, the current phase β (by extension, the d-axis current command value Id*) may be changed by a small angle Δβ once every control cycle, and the direction in which the current phase β changes may be changed in response to a change condition of the system loss Ps at that time. For example, when the absolute value of the system loss Ps reduces at the time when the current phase β is changed in the positive (or negative) direction by the small angle Δβ, the current phase β is continuously changed in the same positive (or negative) direction; whereas, when the absolute value of the system loss Ps increases, the current phase β is changed in the opposite negative (or positive) direction. By repeating this process, the d-axis current command value Id* may be adjusted such that the system loss Ps is minimum. In any case, as long as the finally obtained system loss Ps is a minimum value, a method of identifying the q-axis current command value Iq* and the d-axis current command value Id* is not limited.

In the present embodiment, the q-axis and d-axis current command values Iq*, Id* are set such that the system loss Ps is minimum. However, as long as the system loss Ps is smaller than the system loss Ps at the time when the motor loss Pm is minimum, the system loss Ps is not necessarily minimum. For example, in the example shown in FIG. 3, as long as the system loss Ps is smaller than the system loss Ps = Ps_2 at the time when β = β3 at which the motor loss Pm is minimum, the system loss Ps does not need to be a minimum value (Ps_1). In the example shown in FIG. 3, the current phase β just needs to be larger than β1 (β1 < β2), which is the current phase at the time when the system loss Ps is Ps_2, and smaller than β3.

In the present embodiment, the q-axis current command value Iq* is determined on the basis of the torque command value Tr*, and each of the motors 14, 24 is controlled through current feedback control. However, as long as the system loss Ps is smaller than the system loss Ps at the time when the motor loss Pm is minimum, the remaining manner of control may be changed as needed. For example, in the present embodiment, PI operation is performed on the current deviations; instead, PID operation may be performed on the current deviations. In the present embodiment, the torque command value is input; instead, another parameter may be input. For example, a speed command value of each of the motors may be input, a deviation between the speed command value and a detected motor speed may be calculated, PI operation, or the like, may be performed on the speed deviation, a torque command value may be calculated, and a q-axis current command value Iq* may be calculated from the obtained torque command value.

## Claims

1. A motor control apparatus for controlling a motor system including a motor (14; 24) and an inverter (36; 38) that is configured to output electric power to the motor (14; 24), the motor control apparatus **characterized by** comprising:

   an electronic control unit (10) configured to

      set a q-axis current command value (Iq*) in response to a torque command value (Tr*), and
      execute system loss reduction control for controlling a d-axis current command value (Id*) such that a system loss (Ps) that is the sum of a copper loss (Pc), an iron loss (Pi) and an inverter loss (Pinv) is smaller than the system loss (Ps) at the time when a motor loss (Pm) that is the sum of the copper loss (Pc) and the iron loss (Pi) is minimum, the copper loss (Pc), the iron loss (Pi) and the inverter loss (Pinv) changing as a current phase (β) of a current vector changes in a q-d plane.

2. The motor control apparatus according to claim 1, **characterized in that**
   the electronic control unit (10) is configured to execute the system loss reduction control in a region (E1) in which an induced voltage is lower than or equal to a motor terminal voltage.

**3.** The motor control apparatus according to claim 1 or 2, **characterized in that** the electronic control unit (10) is configured to control the d-axis current command value (Id*) such that the system loss (Ps) is minimum in the system loss reduction control.

**4.** The motor control apparatus according to any one of claims 1 to 3, **characterized in that** the electronic control unit (10) is configured to

prestore a map that records the d-axis current command value (Id*) and the q-axis current command value (Iq*) in correspondence with each operating point that is determined based on a motor rotation speed (Nm) and the torque command value (Tr*), and
identify the d-axis current command value (Id*) and the q-axis current value (Iq*) by applying the motor rotation speed (Nm) and the torque command value (Tr*) to the map in the system loss reduction control.

**5.** The motor control apparatus according to any one of claims 1 to 4, **characterized in that** the electronic control unit (10) is configured to obtain each system loss (Ps) by adding a corresponding inverter loss (Pinv) to the corresponding motor loss (Pm).

**6.** A motor control method for controlling a motor system including a motor (14; 24) and an inverter (36; 38) that is configured to output electric power to the motor (14; 24), the motor control method **characterized by** comprising:

setting a q-axis current command value (Iq*) in response to a torque command value (Tr*); and
controlling a d-axis current command value (Id*) such that a system loss (Ps) that is the sum of a copper loss (Pc), an iron loss (Pi) and an inverter loss (Pinv) is smaller than the system loss (Ps) at the time when a motor loss (Pm) that is the sum of the copper loss (Pc) and the iron loss (Pi) is minimum, the copper loss (Pc), the iron loss (Pi) and the inverter loss (Pinv) changing as a current phase (β) of a current vector changes in a q-d plane.

**7.** The motor control method according to claim 6, **characterized by** comprising:

executing the system loss reduction control in a region (E1) in which an induced voltage is lower than or equal to a motor terminal voltage.

**8.** The motor control method according to claim 6 or 7, **characterized by** comprising:

controlling the d-axis command current value (Id*) such that the system loss (Ps) is minimum in the system loss reduction control.

**9.** The motor control method according to any one of claims 6 to 8, **characterized by** comprising:

prestoring a map that records the d-axis current command value (Id*) and the q-axis current command value (Iq*) in correspondence with each operating point that is determined based on a motor rotation speed (Nm) and the torque command value (Tr*), and
identifying the d-axis current command value (Id*) and the q-axis current command value (Iq*) by applying the motor rotation speed (Nm) and the torque command value (Tr*) to the map in the system loss reduction control.

**10.** The motor control method according to any one of claims 6 to 9, **characterized by** comprising:

obtaining each system loss (Ps) by adding a corresponding inverter loss (Pinv) to the corresponding motor loss (Pm).

# FIG. 1

16
BATTERY
42
40
10
Tb
Ib
Br
Vb
A
V
Sv
CONTROLLER
CONVERTER
Acc
VH
35
V
44
24
MG1
INVERTER
INVERTER
13
Tw
22
28
36
15
38
ENGINE
POWER
SPLIT
MECHANISM
TRANSMISSION
MG2
18
20
14
12
32
32
34
30
34

FIG. 2

TORQUE
E1
Ea
E2
ROTATION SPEED

FIG. 3

Ps_0
Ps_2
Ps_1
Ps_2
Ps
Pm
Pi
Pinv
Pc
LOSS
β=0
β1
β2
β3
CURRENT PHASE

# FIG. 4

LOSS
Pinv
Pc
Pi
Pinv
Pc
Pi
Pinv
Pc
Pi
MAXIMUM TORQUE CONTROL
MOTOR LOSS MINIMUM CONTROL
SYSTEM LOSS REDUCTION CONTROL

# FIG. 5

START
CALCULATE TORQUE COMMAND VALUE Tr*
S10
S12
DOES OPERATING POINT FALL WITHIN REGION E1 ?
NO
YES
S14
EXECUTE SYSTEM LOSS REDUCTION CONTROL
EXECUTE FIELD WEAKENING CONTROL
S16
RETURN

FIG. 6
Tr*
CURRENT COMMAND GENERATION UNIT
52
Iq*
Id*
+
−
ΔIq
ΔId
54
PI OPERATION UNIT
Vq*
Vd*
56
TWO-AXIS-TO-THREE-AXIS CONVERSION UNIT
Vu
Vv
Vw
58
PWM SIGNAL GENERATION UNIT
36,38
INV
Iu
Iv
Iq
Id
THREE-AXIS-TO-TWO-AXIS CONVERSION UNIT
60
MG
14,24
41
Nm
θ
ROTATION SPEED CALCULATION UNIT
62

FIG. 7

Tr*
52
q-AXIS CURRENT COMMAND GENERATION UNIT
Iq*
70
Iq*
CURRENT PHASE GENERATION UNIT
β
d-AXIS CURRENT COMMAND GENERATION UNIT
Id*
72
Nm
74

Europäisches
Patentamt
European
Patent Office
Office européen
des brevets

# EUROPEAN SEARCH REPORT

Application Number
EP 15 20 0670

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/030163 A1 (FUKUCHI MASANARI [JP] ET AL) 7 February 2008 (2008-02-07)<br>* paragraphs [0064], [0065], [0085] - [0092] *<br>* figures 1, 5, 6, 10a, 10b, 11a *<br>----- | 1-10 | INV.<br>H02P21/00 |
| | | | TECHNICAL FIELDS SEARCHED (IPC) |
| | | | H02P |

The present search report has been drawn up for all claims

1

| Place of search | Date of completion of the search | Examiner |
|---|---|---|
| Munich | 13 May 2016 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 20 0670

This annex lists the patent family members relating to the patent documents cited in the above-mentioned European search report. The members are as contained in the European Patent Office EDP file on
The European Patent Office is in no way liable for these particulars which are merely given for the purpose of information.

13-05-2016

| Patent document cited in search report | Publication date | Patent family member(s) | Publication date |
|---|---|---|---|
| US 2008030163 A1 | 07-02-2008 | DE 102007035234 A1 | 28-02-2008 |
| | | JP 4712638 B2 | 29-06-2011 |
| | | JP 2008043030 A | 21-02-2008 |
| | | US 2008030163 A1 | 07-02-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008236948 A
- JP 2005210772 A